# FASCICULE DE BREVET EUROPEEN

(11) **EP 3 856 599 B1**
(45) Date de publication et mention de la délivrance du brevet: **15.05.2024**
(21) Numéro de dépôt: 19783585.3
(22) Date de dépôt: 04.09.2019
(51) Int. Cl.: B60W 40/068

(54) **PROCÉDÉ DE DÉTERMINATION PAR MULTIPLES PARAMÈTRES DU TYPE DU SOL SUR LEQUEL CIRCULE UN VÉHICULE, ET PRODUIT PROGRAMME D'ORDINATEUR, DISPOSITIF DE CALCUL ET VÉHICULE ASSOCIÉS**
VERFAHREN ZUR BESTIMMUNG, UNTER VERWENDUNG MEHRERER PARAMETER, DER ART DES BODENS, AUF DEM EIN FAHRZEUG FÄHRT, UND ENTSPRECHENDES COMPUTERPROGRAMM UND FAHRZEUG, SOWIE ENTSPRECHENDE RECHENVORRICHTUNG
METHOD FOR DETERMINING, USING MULTIPLE PARAMETERS, THE TYPE OF GROUND ON WHICH A VEHICLE IS DRIVING, AND ASSOCIATED COMPUTER PROGRAM, COMPUTING DEVICE AND VEHICLE

(30) Priorité: 28.09.2018 FR 1858938
(43) Date de publication de la demande: 04.08.2021
(73) Titulaire: Stellantis Auto SAS, 78300 Poissy (FR)
(72) Inventeur: GIROD A PETIT LOUIS, Adrien, 78960 VOISINS LE BRETONNEUX (FR); RONDEL, Jeremie, 78210 SAINT CYR L'ECOLE (FR); BLAISE, Philippe, 90110 ROUGEMONT LE CHATEAU (FR)
(86) Numéro de dépôt international: PCT/FR2019/052034
(87) Numéro de publication internationale: WO 2020/065156

(56) Documents cités:
- EP-A1- 2 731 844
- GB-A- 2 546 980

## Description

### Domaine technique de l'invention

L'invention concerne les véhicules à roues qui se déplacent sur un sol, et plus précisément la détermination du type de ce sol.

### Etat de la technique

De nombreux véhicules à roues, généralement de type automobile, comprennent un dispositif de calcul de trajectoire chargé de déterminer une stratégie de contrôle de leur freinage et de leur couple moteur en cas de détection d'une perte d'adhérence (dérapage ou patinage) de l'une de leurs roues motrices. Ce type de dispositif est généralement connu, non limitativement, sous des acronymes anglais tels que ASR (« Accélération Slip Régulation ») ou TCS (« Traction Control System ») dans le cas de l'anti-patinage, et ESC (« Electronic Stability Control ») ou ESP (« Electronic Stability Program ») dans le cas de l'anti-dérapage.

Certains de ces dispositifs de contrôle de trajectoire sont agencés de manière à déterminer la stratégie de contrôle en fonction du type du sol sur lequel circule leur véhicule.

Actuellement, le type du sol est généralement choisi par le conducteur du véhicule au moyen d'un organe de commande dédié ou d'une sélection d'une option d'un menu affiché sur un écran d'un combiné central de planche de bord ou d'un tableau de bord. Une telle solution s'avère onéreuse et peu présenter des dysfonctionnements (notamment dus à l'usure), lorsqu'elle utilise un organe de commande dédié. De plus, dans les deux implémentations possibles, le conducteur peut avoir réalisé un choix erroné ou bien oublié de modifier son choix lors d'un changement de type de sol. En outre, en cas de changement brusque du type de sol le temps nécessaire au conducteur pour modifier son choix est relativement long.

Il a été également proposé que le type du sol soit déterminé de façon automatisée en fonction du coefficient de frottement, lequel est représentatif de l'adhérence d'au moins une roue motrice du véhicule sur le sol. Cependant, ce mode de détermination s'avère actuellement peu fiable.

Le document GB 2 546 980 A divulgue un procédé de détermination du type de sol basé sur plusieurs paramètres. Le type de sol ainsi déterminé est ensuite utilisé pour modifier les réglages de divers systèmes d'assistance à la conduite du véhicule.

L'invention a donc notamment pour but d'améliorer la situation.

### Présentation de l'invention

L'invention propose un procédé selon la revendication 1, un produit programme d'ordinateur selon la revendication 6, un dispositif de calcul selon la revendication 7, un dispositif de calcul de trajectoire selon la revendication 8, ainsi qu'un véhicule selon la revendication 9.

### Brève description des figures

D'autres caractéristiques et avantages de l'invention apparaîtront à l'examen de la description détaillée ci-après, et des dessins annexés, sur lesquels :
- la figure 1 illustre schématiquement et fonctionnellement un véhicule équipé d'un dispositif de calcul de trajectoire comportant un dispositif de calcul selon l'invention, et
- la figure 2 illustre schématiquement un exemple d'algorithme mettant en oeuvre un procédé de détermination selon l'invention.

### Description détaillée de l'invention

L'invention a notamment pour but de proposer un procédé de détermination, et un dispositif de calcul DCA associé, destinés à déterminer de façon automatisée et au moyen de multiples paramètres le type du sol sur lequel circule un véhicule V à roues.

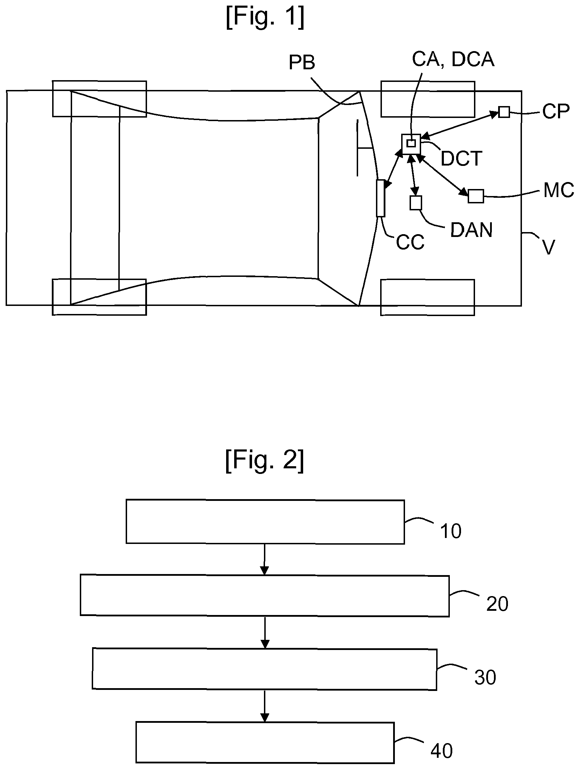

Dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule. Elle concerne en effet tout type de véhicule à roues. Ainsi, elle concerne aussi les véhicules utilitaires, les motocyclettes (à deux ou trois roues), les bus (ou cars), les camions, les engins de voirie, les engins de chantier, et les aéronefs à roues, par exemple.

On a schématiquement représenté sur la figure 1 un exemple de véhicule automobile V (à roues) comprenant notamment un dispositif de calcul de trajectoire DCT et un dispositif de calcul DCA selon l'invention.

Le dispositif de calcul de trajectoire DCT est chargé de déterminer une stratégie de contrôle du freinage et du couple moteur du véhicule V en cas de détection d'une perte d'adhérence (dérapage ou patinage) de l'une de ses roues motrices. Par exemple, ce dispositif de calcul de trajectoire DCT peut être de type ESP (Electronic Stability Program) afin de lutter contre les dérapages des roues du véhicule V. Mais il pourrait être de type ASR (Accélération Slip Régulation) ou TCS (Traction Control System) afin de lutter contre le patinage des roues du véhicule V, ou de type ESC (Electronic Stability Control) afin de lutter contre les dérapages des roues du véhicule V.

Comme on le verra plus loin, le dispositif de calcul DCA, selon l'invention, est chargé de déterminer de façon automatisée le type du sol sur lequel circule le véhicule V. Il comprend au moins un calculateur CA comportant, par exemple, au moins un processeur de signal numérique (ou DSP (« Digital Signal Processor »)), éventuellement associé à au moins une mémoire.

On notera que dans l'exemple illustré non limitativement sur la figure 1 le dispositif de calcul DCA est installé dans le dispositif de calcul de trajectoire DCT du fait que ce dernier (DCT) utilise le type de sol qu'il détermine pour déterminer sa stratégie de contrôle du freinage et du couple moteur. Mais cela n'est pas obligatoire. En effet, le dispositif de calcul DCA peut être un équipement indépendant du dispositif de calcul de trajectoire DCT, mais couplé à ce dernier (DCT) directement ou indirectement (par exemple via un réseau de communication du véhicule V, éventuellement de type multiplexé). Dans ce cas, le dispositif de calcul DCA peut, par exemple, comprendre un boîtier de protection muni d'au moins un connecteur. Dans une autre variante, le dispositif de calcul DCA pourrait faire partie d'un équipement de communication mobile transporté par un passager du véhicule V et donc temporairement embarqué dans ce dernier (V). Cet équipement de communication mobile peut, par exemple, être un téléphone mobile intelligent (ou « smartphone ») ou une tablette électronique communicante. Dans cette dernière variante, l'équipement de communication mobile doit être agencé de manière à échanger des messages par voie d'ondes avec un module de communication MC équipant le véhicule V.

Comme évoqué plus haut, l'invention propose notamment un procédé de détermination destiné à permettre la détermination de façon automatisée du type du sol sur lequel circule le véhicule V.

Ce procédé de détermination peut être au moins partiellement mis en oeuvre par le dispositif de calcul DCA équipant le véhicule V.

Le procédé de détermination, selon l'invention, comprend une étape 10-40 dans laquelle on (le calculateur CA) détermine le type du sol en fonction d'une valeur vs d'une somme d'au moins deux coefficients numériques cjk associés respectivement à au moins deux paramètres pj. Ces paramètres pj sont choisis parmi un paramètre météorologique p1 (j = 1) à l'extérieur du véhicule V, un paramètre de sol p2 (j = 2) qui est représentatif du type de sol sur lequel est en train de circuler le véhicule V, et un paramètre d'adhérence p3 (j = 3) qui est représentatif de l'adhérence en cours d'au moins une roue motrice du véhicule V. L'indice « k » désigne chacun des coefficients numériques cjk qui sont associés respectivement aux différentes valeurs vjk que peut prendre un paramètre pj (ou aux différents intervalles de valeurs auxquels peut appartenir un paramètre pj). Le mot « valeur vjk » ne désigne pas forcément un chiffre. Il peut en effet s'agir d'un nombre ou d'un intervalle de nombres ou encore d'un mot ou d'une expression.

Les associations entre les valeurs vjk et les coefficients numériques cjk de chaque paramètre pj peuvent, par exemple, être définies dans une première table de correspondance (vjk/cjk) qui est stockée dans le calculateur CA.

Le type du sol étant désormais déterminé à partir de plusieurs (au moins deux) paramètres, il est donc beaucoup plus fiable que lorsqu'il n'est déterminé qu'avec le seul coefficient de frottement estimé par le dispositif de calcul de trajectoire DCT. De plus, le type du sol étant désormais déterminé en quasi temps réel, l'équipement qui l'utilise (par exemple le dispositif de calcul de trajectoire DCT) peut donc réagir en conséquence beaucoup plus rapidement, ce qui améliore la sécurité du véhicule V et le confort des passagers de ce dernier (V).

De préférence, on (le calculateur CA) utilise les trois paramètres pj (j = 1 à 3) précités, afin d'optimiser la fiabilité du calcul.

Par exemple, dans l'étape 10-40 on (le calculateur CA) détermine le type du sol dans une seconde table qui établit une correspondance entre des types de sol et des valeurs vs de somme de coefficients numériques cjk. Cette seconde table de correspondance est stockée dans le calculateur CA. On comprendra qu'une fois que le calculateur CA dispose des valeurs vjk des paramètres pj qu'il utilise, il détermine les coefficients numériques cjk qui sont respectivement associés à ces valeurs vjk (par exemple dans la première table), puis il effectue la somme de ces coefficients numériques cjk déterminés, ce qui donne une valeur de somme vs, puis il détermine le type du sol qui correspond à cette valeur de somme vs déterminée (par exemple dans la seconde table).

Par exemple, dans l'étape 10-40 le type du sol peut être choisi parmi au moins trois éléments d'un groupe d'éléments comprenant le sable, la boue, la terre, la neige, la glace, le bitume, le bitume fondu, les gravillons et le liquide. Cette liste d'éléments est donnée à titre d'exemple, et donc non exhaustive. Ainsi, le calculateur CA peut, par exemple et non limitativement, être agencé de manière à déterminer un type de sol qui est soit du sable, soit de la boue, soit encore de la neige.

Egalement par exemple, dans l'étape 10-40 le paramètre de sol p2 peut, par exemple, être fourni par une base d'informations routières en fonction de la position géographique en cours du véhicule V ou par une information routière qui a été déterminée dans des images acquises dans l'environnement situé devant le véhicule V par au moins une caméra équipant le véhicule V ou bien transmise par un autre véhicule voisin du véhicule V ou une station d'informations d'une infrastructure routière.

La base d'informations routières peut, par exemple, faire partie d'un dispositif d'aide à la navigation DAN (assurant en outre une fonction de géolocalisation), embarqué dans le véhicule V de façon permanente (comme illustré non limitativement sur la figure 1) ou de façon temporaire. Dans cette dernière alternative, le dispositif d'aide à la navigation peut faire partie d'un équipement de communication mobile transporté par un passager du véhicule V. On comprendra que cette base d'informations routières fournit pour une région donnée le type de sol de chaque zone en fonction de la position géographique de cette zone.

En variante, la base d'informations routières peut être stockée dans un serveur qui est accessible via le module de communication MC du véhicule V ou par un équipement de communication mobile transporté par un passager du véhicule V et comprenant le dispositif de calcul DCA.

La détermination de l'information routière (de type de sol) se fait par une analyse des images qui sont acquises dans l'environnement. Cette analyse peut être réalisée par des circuits d'analyse indépendants du dispositif de calcul DCA ou bien faisant partie de ce dernier (DCA).

Egalement par exemple, dans l'étape 10-40 le paramètre d'adhérence p3 peut, par exemple, être un coefficient de frottement qui est représentatif de l'adhérence en cours d'au moins une roue motrice du véhicule V sur le sol. Ce coefficient de frottement est par exemple estimé par le dispositif de calcul de trajectoire DCT.

Egalement par exemple, dans l'étape 10-40 le paramètre météorologique p1 peut, par exemple, être extrait d'un bulletin météorologique qui a été reçu dans le véhicule V, ou bien être fourni par un capteur CP équipant le véhicule V.

Ce bulletin météorologique peut être reçu par le module de communication MC ou un récepteur radiophonique du véhicule V, ou bien par un équipement de communication mobile transporté par un passager du véhicule V et comprenant le dispositif de calcul DCA. Il peut être requis par le dispositif de calcul DCA ou bien transmis de façon automatique par exemple en mode diffusion (ou « broadcast »). On comprendra que ce bulletin météorologique fournit pour une région donnée des données météorologiques de zones en fonction des positions géographiques respectives de ces zones.

Egalement par exemple, dans l'étape 10-40 le paramètre météorologique p1 peut, par exemple, être choisi parmi un intervalle de températures auquel appartient la température de l'air extérieur et un intervalle de taux d'humidité auquel appartient un taux d'humidité de l'air extérieur. On notera que chaque intervalle peut être aussi petit qu'on le veut. Par exemple, on peut utiliser un premier intervalle de températures compris entre +25°C et +50°C, un deuxième intervalle de températures compte entre +4°C et +24°C, et un troisième intervalle de températures compris entre -40 °C et +3°C.

On notera qu'au lieu d'utiliser des intervalles de températures ou de taux d'humidité, on pourrait utiliser directement les températures ou taux d'humidité mesuré(e)s ou prévu(e)s.

Un exemple purement illustratif de première table de correspondance (vjk/cjk) est donné ci-après lorsque le calculateur CA est agencé de manière à déterminer un type de sol qui est soit du sable, soit de la boue, soit encore de la neige.

**[Table 1]**

| | | | |
|---|---|---|---|
| température (p1) | v11 =[+25°C, +50 °C] | v12=[+4°C, +24 °C] | v13=[-40°C, +3°C] |
| | c11=1 | c12=2 | c13=3 |
| coefficient de frottement (p3) | v31=µ1 (sable) | v32=µ2 (boue) | v33=µ3 (neige) |
| | c31=0,1 | c32=0,2 | c33=0,3 |
| paramètre de sol (p2) | v21=sable | v22=boue | v23=neige |
| | c21=0,01 | c22=0,02 | c23=0,03 |

Dans cet exemple, si l'on obtient trois coefficients numériques cjk égaux respectivement à 1, 0,1 et 0,02 (ou 0,01), la valeur vs de leur somme est égale à 1,12 (ou 1,11) et donc on en déduit que le type du sol est du sable. De même, si l'on obtient trois coefficients numériques cjk égaux respectivement à 1 (ou 2), 0,2 et 0,02, la valeur vs de leur somme est égale à 1,22 (ou 2,22) et donc on en déduit que le type du sol est de la boue. Egalement de même, si l'on obtient trois coefficients numériques cjk égaux respectivement à 3, 0,3 et 0,03 (ou 0,02), la valeur vs de leur somme est égale à 3,33 (ou 3,32) et donc on en déduit que le type du sol est de la neige.

On notera que dans l'étape 10-40 le calculateur CA peut être éventuellement agencé de manière à déclencher l'affichage d'une page comportant des imagettes représentatives de chaque type de sol pris en compte par un écran de type tactile embarqué dans le véhicule V. Cet écran tactile peut être embarqué de façon permanente, et dans ce cas il peut, par exemple, faire partie du combiné central CC qui peut être installé dans ou sur la planche de bord PB du véhicule V (comme illustré non limitativement sur la figure 1), ou bien de façon temporaire, et dans ce cas il peut faire partie d'un équipement de communication mobile transporté par un passager du véhicule V.

Cet affichage de page d'imagettes signale le type de sol qui a été déterminé et les autres types de sol et est destiné à permettre au conducteur du véhicule V de choisir un autre type de sol s'il le désire ou s'il estime que celui déterminé par le calculateur CA n'est pas le bon. Dans ce cas, c'est le type de sol choisi par le conducteur, par un contact de l'un de ses doigts sur l'imagette qui le représente, qui est alors utilisé par le dispositif de calcul de trajectoire DCT.

On a schématiquement illustré sur la figure 2 un exemple d'algorithme mettant en oeuvre l'étape 10-40 du procédé de détermination décrit ci-avant.

Dans une première sous-étape 10 de cette étape, on (le calculateur CA) reçoit des informations qui représentent les valeurs vjk des paramètres pj utilisés.

Dans une deuxième sous-étape 20 de l'étape, on (le calculateur CA) détermine (par exemple dans la première table) les coefficients numériques cjk qui sont respectivement associées aux valeurs vjk.

Dans une troisième sous-étape 30 de l'étape, on (le calculateur CA) effectue la somme des coefficients numériques cjk déterminés dans la deuxième sous-étape 20, ce qui donne la valeur de somme vs.

Dans une quatrième sous-étape 40 de l'étape, on (le calculateur CA) détermine (par exemple dans la seconde table) le type du sol qui correspond à cette valeur de somme vs déterminée dans la troisième sous-étape 30.

On notera également que l'invention propose aussi un produit programme d'ordinateur comprenant un jeu d'instructions qui, lorsqu'il est exécuté par des moyens de traitement de type circuits électroniques (ou hardware), comme par exemple le calculateur CA, est propre à mettre en oeuvre le procédé de détermination décrit ci-avant pour déterminer le type du sol sur lequel circule le véhicule V.

On notera également que sur la figure 1 les moyens de traitement (ou calcul) et de contrôle du dispositif de calcul DCA sont très schématiquement et fonctionnellement illustrés par son seul calculateur CA. Ce calculateur CA peut comprendre au moins un processeur de signal numérique (ou DSP (Digital Signal Processor)), éventuellement associé à une mémoire vive pour stocker des instructions pour la mise en oeuvre par ce processeur d'une partie au moins du procédé de détermination. Par ailleurs, les moyens de traitement (ou calcul) et de contrôle du dispositif de calcul DCA peuvent éventuellement comprendre un boitier comportant des circuits intégrés (ou imprimés), reliés par des connections filaires ou non filaires. On entend par circuit intégré (ou imprimé) tout type de dispositif apte à effectuer au moins une opération électrique ou électronique. De plus, ce dispositif de calcul DCA peut éventuellement comprendre une pluralité de processeurs, au moins une mémoire de masse, une interface d'entrée, notamment pour recevoir les informations (éventuellement requises) qu'il va ensuite éventuellement mettre en forme et/ou démoduler et/ou amplifier de façon connue en soi, et une interface de sortie, notamment pour délivrer le type de sol déterminé ainsi qu'éventuellement des requêtes d'obtention d'informations.

Une ou plusieurs sous-étapes de l'étape du procédé de détermination peuvent être effectuées par des composants différents. Ainsi, le procédé de détermination peut-être mis en oeuvre par une pluralité de processeurs, mémoire vive, mémoire de masse, interface d'entrée, interface de sortie et/ou processeur de signal numérique.

## Revendications

1. Procédé de détermination du type du sol sur lequel circule un véhicule (V), comprenant une étape (10-40) dans laquelle on détermine ledit type du sol en fonction d'une valeur d'une somme d'au moins deux coefficients numériques associés respectivement à au moins deux paramètres choisis parmi un paramètre météorologique à l'extérieur dudit véhicule (V), un paramètre de sol représentatif du type de sol sur lequel est en train de circuler ledit véhicule (V), et un paramètre d'adhérence en cours d'au moins une roue motrice dudit véhicule (V), **caractérisé en ce que** dans ladite étape (10-40) on détermine ledit type du sol dans une table établissant une correspondance entre des types de sol et des valeurs de somme de coefficients numériques.

2. Procédé selon la revendication 1, **caractérisé en ce que** dans ladite étape (10-40) ledit type du sol est choisi parmi au moins trois éléments d'un groupe d'éléments comprenant le sable, la boue, la terre, la neige, la glace, le bitume, le bitume fondu, les gravillons et le liquide.

3. Procédé selon l'une des revendications 1 ou 2, **caractérisé en ce que** dans ladite étape (10-40) ledit paramètre de sol est fourni par une base d'informations routières en fonction d'une position géographique en cours dudit véhicule (V), ou par une information routière déterminée dans des images acquises dans l'environnement situé devant ledit véhicule (V) par au moins une caméra équipant ledit véhicule (V) ou bien transmise par un autre véhicule voisin dudit véhicule (V) ou une station d'informations d'une infrastructure routière.

4. Procédé selon l'une des revendications 1 à 3, **caractérisé en ce que** dans ladite étape (10-40) ledit paramètre d'adhérence est un coefficient de frottement représentatif de l'adhérence en cours d'au moins une roue motrice dudit véhicule (V) sur ledit sol.

5. Procédé selon l'une des revendications 1 à 4, **caractérisé en ce que** dans ladite étape (10-40) ledit paramètre météorologique est extrait d'un bulletin météorologique reçu dans ledit véhicule (V) ou fourni par un capteur équipant ledit véhicule (V).

6. Produit programme d'ordinateur comprenant un jeu d'instructions qui, lorsqu'il est exécuté par des moyens de traitement, est propre à mettre en oeuvre le procédé de détermination selon l'une des revendications précédentes pour déterminer le type du sol sur lequel circule un véhicule (V).

7. Dispositif de calcul (DCA) pour un véhicule (V) circulant sur un sol, **caractérisé en ce qu'**il est configuré pour mettre en oeuvre le procédé selon l'une des revendications 1 à 5.

8. Dispositif de calcul de trajectoire (DCT) destiné à équiper un véhicule (V), déterminant une stratégie de contrôle du freinage et du couple moteur dudit véhicule (V) en fonction d'un type de sol sur lequel circule ce véhicule (V), en cas de détection d'une perte d'adhérence de l'une des roues motrices dudit véhicule (V), et comprenant un dispositif de calcul (DCA) selon la revendication 7.

9. Véhicule (V) propre à circuler sur un sol, **caractérisé en ce qu'**il comprend un dispositif de calcul (DCA) selon la revendication 7 ou un dispositif de calcul de trajectoire (DCT) selon la revendication 8.

## Patentansprüche

1. Verfahren zur Bestimmung der Bodenart, auf der ein Fahrzeug (V) fährt, umfassend einen Schritt (10-40), in dem die Bodenart in Abhängigkeit von einem Wert einer Summe von jeweils mindestens zwei zugehörigen digitalen Koeffizienten bestimmt wird auf mindestens zwei Parameter, ausgewählt aus einem meteorologischen Parameter außerhalb des Fahrzeugs (V), einem Bodenparameter, der für die Art des Bodens repräsentativ ist, auf dem das Fahrzeug (V) fährt, und einem Haftungsparameter im Verlauf von mindestens einem Antriebsrad des Fahrzeugs (V). Fahrzeug (V), **dadurch gekennzeichnet, dass** in Schritt (10-40) der Bodentyp in einer Tabelle bestimmt wird, die eine Entsprechung zwischen Bodentypen und Summenwerten digitaler Koeffizienten herstellt.

2. Verfahren nach Anspruch 1, **dadurch gekennzeichnet, dass** in Schritt (10-40) der Bodentyp aus mindestens drei Elementen einer Gruppe von Elementen ausgewählt wird, die Sand, Schlamm, Erde, Schnee, Eis, Bitumen, geschmolzenes Bitumen und Kies umfasst und flüssig.

3. Verfahren nach einem der Ansprüche 1 oder 2, **dadurch gekennzeichnet, dass** in Schritt (10-40) der Bodenparameter von einer Straßeninformationsbasis als Funktion einer aktuellen geografischen Position des Fahrzeugs (V) oder von Straßeninformationen bereitgestellt wird anhand von Bildern ermittelt werden, die in der Umgebung vor dem Fahrzeug (V) von mindestens einer mit dem Fahrzeug (V) ausgestatteten Kamera erfasst oder von einem anderen Fahrzeug in der Nähe des Fahrzeugs (V) oder einer Station Informationen über eine Straßeninfrastruktur übermittelt werden.

4. Verfahren nach einem der Ansprüche 1 bis 3, **dadurch gekennzeichnet, dass** in Schritt (10-40) der Adhäsionsparameter ein Reibungskoeffizient ist, der die aktuelle Adhäsion mindestens eines Antriebsrads des Fahrzeugs (V) auf dem Boden darstellt.

5. Verfahren nach einem der Ansprüche 1 bis 4, **dadurch gekennzeichnet, dass** in Schritt (10-40) der meteorologische Parameter aus einer Wettermeldung extrahiert wird, die in dem Fahrzeug (V) empfangen oder von einem an dem Fahrzeug (V) angebrachten Sensor bereitgestellt wird.

6. Computerprogrammprodukt, umfassend einen Befehlssatz, der bei Ausführung durch Verarbeitungsmittel in der Lage ist, das Bestimmungsverfahren nach einem der vorhergehenden Ansprüche umzusetzen, um die Art des Bodens zu bestimmen, auf dem ein Fahrzeug (V) fährt.

7. Berechnungseinrichtung (DCA) für ein am Boden fahrendes Fahrzeug (V), **dadurch gekennzeichnet, dass** sie zur Durchführung des Verfahrens nach einem der Ansprüche 1 bis 5 eingerichtet ist.

8. Trajektorienberechnungsgerät (DCT) zur Ausrüstung eines Fahrzeugs (V), das eine Strategie zur Steuerung des Brems- und Motordrehmoments bestimmt des Fahrzeugs (V) in Abhängigkeit von der Art des Untergrunds, auf dem dieses Fahrzeug (V) fährt, im Falle der Feststellung eines Haftungsverlusts an einem der Antriebsräder des Fahrzeugs (V), und umfassend a Berechnungseinrichtung (DCA) nach Anspruch 7.

9. Fahrzeug (V), das für die Fahrt auf dem Boden geeignet ist, **dadurch gekennzeichnet, dass** es eine Berechnungsvorrichtung (DCA) nach Anspruch 7 oder eine Flugbahnberechnungsvorrichtung (DCT) nach Anspruch 8 umfasst.

## Claims

1. Method for determining the type of soil on which a vehicle (V) is traveling, comprising a step (10-40) in which said type of soil is determined as a function of a value of a sum of at least two associated digital coefficients respectively to at least two parameters chosen from a meteorological parameter outside said vehicle (V), a ground parameter representative of the type of ground on which said vehicle (V) is traveling, and a grip parameter in course of at least one driving wheel of said vehicle (V), **characterized in that** in said step (10-40) said soil type is determined in a table establishing a correspondence between soil types and sum values of coefficients digital.

2. Method according to claim 1, **characterized in that** in said step (10-40) said type of soil is chosen from at least three elements of a group of elements comprising sand, mud, earth, snow, ice, bitumen, melted bitumen, gravel and liquid.

3. Method according to one of claims 1 or 2, **characterized in that** in said step (10-40) said ground parameter is provided by a road information base as a function of a current geographical position of said vehicle (V), or by road information determined in images acquired in the environment located in front of said vehicle (V) by at least one camera equipping said vehicle (V) or transmitted by another vehicle neighboring said vehicle (V) or a station information about a road infrastructure.

4. Method according to one of claims 1 to 3, **characterized in that** in said step (10-40) said adhesion parameter is a friction coefficient representative of the current adhesion of at least one driving wheel of said vehicle (V) on said soil.

5. Method according to one of claims 1 to 4, **characterized in that** in said step (10-40) said meteorological parameter is extracted from a weather bulletin received in said vehicle (V) or provided by a sensor fitted to said vehicle (V).

6. Computer program product comprising a set of instructions which, when executed by processing means, is capable of implementing the determination method according to one of the preceding claims to determine the type of soil on which a vehicle (V) circulates.

7. Calculation device (DCA) for a vehicle (V) traveling on ground, **characterized in that** it is configured to implement the method according to one of claims 1 to 5.

8. Trajectory calculation device (DCT) intended to equip a vehicle (V), determining a braking and engine torque control strategy of said vehicle (V) as a function of a type of ground on which this vehicle (V) is traveling, in the event of detection of a loss of grip of one of the drive wheels of said vehicle (V), and comprising a calculation device (DCA) according to claim 7.

9. Vehicle (V) suitable for traveling on ground, **characterized in that** it comprises a calculation device (DCA) according to claim 7 or a trajectory calculation device (DCT) according to claim 8.
